(19) Europäisches Patentamt
European Patent Office
Office européen des brevets

(11) **EP 1 592 191 B1**

(12) **EUROPEAN PATENT SPECIFICATION**

(45) Date of publication and mention
of the grant of the patent:
**06.06.2007 Bulletin 2007/23**

(51) Int Cl.:
***H04L 25/03*** *(2006.01)*

(21) Application number: **04010363.2**

(22) Date of filing: **30.04.2004**

(54) **Equalising structure and method with maximum likelihood detection**

Entzerrerschaltung und Verfahren mit Maximalwahrscheinlichkeitsdetektion

Circuit et méthode d'égalisation avec détection à vraisemblance maximale

(84) Designated Contracting States:
**DE FR GB**

(43) Date of publication of application:
**02.11.2005 Bulletin 2005/44**

(73) Proprietor: **Sony Deutschland GmbH**
**10785 Berlin (DE)**

(72) Inventor: **Stirling-Gallacher,Richard**
**c/o Stuttgart Tech.Ctr.**
**70327 Stuttgart (DE)**

(74) Representative: **Körber, Martin Hans et al**
**Mitscherlich & Partner,**
**Patent- und Rechtsanwälte,**
**Sonnenstrasse 33**
**80331 München (DE)**

(56) References cited:
**EP-A- 1 152 576**          **US-A1- 2003 108 113**

• LI X ET AL: "REDUCED-COMPLEXITY DETECTION ALGORITHMS FOR SYSTEMS USING MULTI-ELEMENT ARRAYS" GLOBECOM'00. 2000 IEEE GLOBAL TELECOMMUNICATIONS CONFERENCE. SAN FRANCISCO, CA, NOV. 27 - DEC. 1, 2000, IEEE GLOBAL TELECOMMUNICATIONS CONFERENCE, NEW YORK, NY : IEEE, US, vol. VOL. 2 OF 4, 27 November 2000 (2000-11-27), pages 1072-1076, XP001017249 ISBN: 0-7803-6452-X
• JUNQIANG LI ET AL: "Multi-stage low complexity maximum likelihood detection for OFDM/SDMA wireless LANs" 11 June 2001 (2001-06-11), ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, PAGE(S) 1152-1156 , XP010553509 ISBN: 0-7803-7097-1 * the whole document *

**Description**

The present invention relates to an equalising structure and method for a receiving device of a wireless communication system, in which transmit information is modulated onto carrier signals according to a modulation scheme, whereby all possible data symbols are represented as constellation points in the signal constellation of the modulation scheme and whereby the equalising structure performs a maximum likelihood detection in order to determine a constellation point with a minimum Euclidean distance to a received signal vector as a most likely received signal vector.

Equalising structures with maximum likelihood detection (MLD) are typically (but not exclusively) used in communication systems in which two or more independent symbols are transmitted in parallel from one or more transmitters within the same time slot and the same frequency band. In such cases, the symbols interfere with each other. Although such interference is generally not desirable in communication systems, it is in some systems used to increase the data rate, the spectral efficiency and/or the system throughput. Examples of such systems are so-called multiple-output, multiple-input (MIMO) systems, code division multiple access (CDMA) systems and orthogonal frequency division multiplexing-coach division multiple access (OFDM-CDMA) systems.

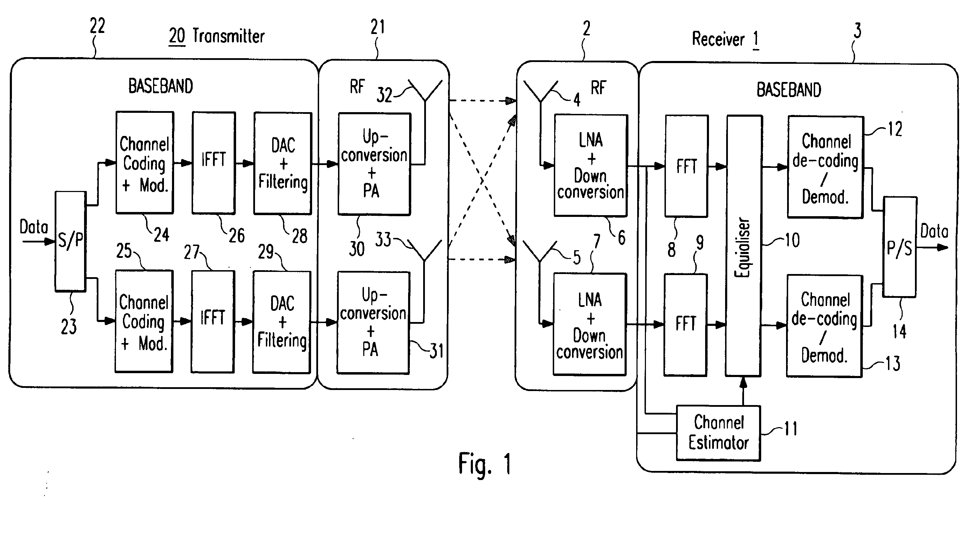

Fig. 1 shows the schematic block diagram of an example MIMO system comprising a receiver 1 and a transmitter 20 for wireless communication on the basis of orthogonal frequency division multiplexing (OFDM). The receiver 1 comprises a radio frequency part 2 and a base band part 3. The radio frequency part 2 has two antennas 4 and 5, each being connected to a low noise amplifier/downconversion unit 6 and 7, respectively. It is to be noted, that the receiver 1 can e.g. be part of a pure receiving device, or can be part of a receiving and transmitting device. In the later case, the antennas 4 and 5 are receiving as well as transmitting antennas. The downconverted signals from the units 6 and 7 are respectively forwarded and processed by a fast fourier transformation unit 8 and 9, respectively. The transformed signals from the fourier transformation units 8 and 9 are forwarded to an equalising structure 10. Signals from a channel estimator 11 are also supplied to the equalising structure 10. The equalising structure 10 performs a maximum likelihood detection in order to determine a constellation point of the signal constellation of the modulation scheme with a minimum Euclidean distance to a received signal vector as a most likely received signal vector. The specific processing is explained further below. After the equalising processing, the signals are further respectively processed in a demodulator/channel decoder 12 and 13, respectively. The output signals from the demodulator/channel decoders 12 and 13, respectively, are forwarded to a parallel/serial processing unit 14, which outputs the received data bit stream.

The transmitter 20 schematically shown in Fig. 1 comprises an RF part 21 and a base band part 22. In the base band part 22, transmit data are split into two parallel data bit streams by a serial/parallel converter 23. The two parallel data bit streams output from the converter 23 are respectively supplied to a channel coder/modulator 24 and 25, respectively. The coded and modulated signals are supplied to an inverse fast fourier transformation unit 26 and 27, respectively, which supply the transform signals to a respective digital/analogue-converter and filter unit 28 and 29, respectively. The analogue filtered signals are then forwarded to a respective upconversion/power amplifying unit 30 and 31, respectively, which transmit the amplified signals via a respective transmit antenna 32 and 33, respectively. It is to be noted, that the transmitter 20 can be part of a transmitting and receiving device.

Generally, a typical MIMO system has $n_T$ transmitting antennas (each transmitting a different data symbol) and $n_R$ receiving antennas. Such a system has a maximum achievable data rate, which is $n_T$ time greater than an equivalent non-MIMO system. In the MIMO system shown as an example in Fig. 1, there are two transmitting antennas ($n_T$=2) and two receiver antennas ($n_R$=2). The data rate is therefore two times higher than in a non-MIMO system.

For general MIMO systems the received signal column vector for each symbol is given by x. It has $n_R$ rows and each row of the vector represents the received signal for each of the receiver antennas. The received signal x is given by,

$$\mathbf{x} = \mathbf{Hs} + \mathbf{n} \qquad\qquad (1)$$

where s is the column vector ($n_T$ x 1), of the sent signal, H is the channel matrix ($n_R$ x $n_T$), representing the channel response from each of the transmitter antennas to the receiving antennas and n is the noise vector ($n_R$ x 1).

For the case of OFDM systems (an example of which is shown in Fig. 1), we shall denote the number of sub-carriers as $M$. We shall refer to the received baseband signal at sub-carrier $m$ ($m$=1,...,$M$) as the received column vector $x_m$ ($n_R$ x 1). Each row element of the vector is the signal from the FFT output corresponding to the $m^{th}$ sub-carrier for each receiver output at the receiver. The receiver vector $x_m$ can therefore be expressed as,

$$\mathbf{x}_m = \mathbf{H}_m \mathbf{s}_m + \mathbf{n}_m \qquad\qquad (2)$$

where $s_m$ is sent signal vector ($n_T$ x 1), $H_m$ is the channel matrix ($n_R$ x $n_T$), and $n_m$ is the noise vector ($n_R$ x 1). Each row element of the sent signal vector $s_m$ corresponds to the input signal of the IFFT corresponding to the $m^{th}$ sub-carrier for each transmitter. The elements of the channel matrix $H_m$ correspond to the different channel responses from the elements of the transmitted vector to the elements of the received vector. It is therefore the combination of the IFFT, the multipath channel and the FFT. It is well known, that for OFDM systems that such a combination leads to a channel matrix $H_m$ whose elements $h_{m,ij}$ ($i=1..n_R$, $j=1..n_T$) are single complex values. For the example shown in Fig. 1 with 2 TX and 2 RX antennas, the received signal for carrier $m$ can be written as,

$$\mathbf{x}_m = \begin{bmatrix} x_{m,1} \\ x_{m,2} \end{bmatrix} = \begin{bmatrix} h_{m,11} & h_{m,12} \\ h_{m,21} & h_{m,22} \end{bmatrix} \begin{bmatrix} s_{m,1} \\ s_{m,2} \end{bmatrix} + \begin{bmatrix} n_{m,1} \\ n_{m,2} \end{bmatrix} \qquad\qquad (3)$$

From now on we will drop the $m$ notation and for the case of the OFDM or multi-carrier systems, we will imply that the equations and vectors are applied to each carrier (or tone) separately. It is important not to neglect that the subsequent processing has to be applied to all $M$ carriers.

The normal state-of-the-art maximum likelihood detector searches over the whole set of possible transmit signals (where $A$ is the set of all possible transmit vectors) to decide in favour of the transmit signal vectorwhich has the minimum Euclidean distance to the receive vector ,

$$\hat{s} = \arg \min_{s \in A} \lVert \mathbf{x} - \mathbf{Hs} \rVert^2 \qquad\qquad (4)$$

The size of the possible transmit signal set $A$, containing all of the possible sent signal vectors depends upon the number of possible sent symbols from each antenna (which depends upon the modulation constellation size) and the number of the number of transmit antennas The number of possible sent signals vectors is given by,

$$\text{Number of possible sent signal vectors} = (\text{Modulation Constellation Size})^{n_T} \qquad\qquad (5)$$

Therefore for higher-level modulation schemes with more than 2 antennas, the set size can be extremely large. To illustrate this, Table 1 summarises the number of comparison that have to be made in equation (4) for the commonly used modulation schemes (BPSK, QPSK, 16 QAM and 64 QAM).

Table 1 - Number of comparisons for MLD

| Modulation Scheme | Antennas ($n_T$,$n_R$) | | |
|---|---|---|---|
| | 2,2 | 3,3 | 4,4 |
| BPSK | 3 | 7 | 15 |
| QPSK | 15 | 63 | 255 |
| 16QAM | 255 | 4095 | 65535 |
| 64QAM | 4095 | 262143 | $1.7 \times 10^7$ |

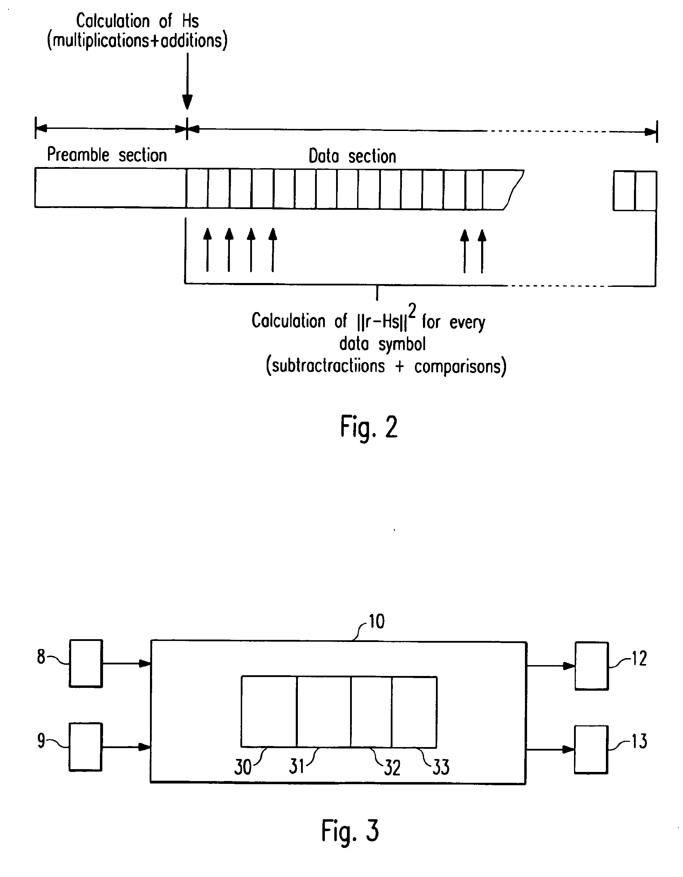

The number of comparisons is of course only one measure of complexity. Other measures include the number of multiplications, additions and subtractions. The exact number of multiplications depends upon the implementation. However for traditional MLD implementations in communications systems, in which a preamble is sent followed by data, once the channel matrix is known (via channel estimation during the preamble period), the complete set of vector product can be formed. This means that during the data phase only the comparisons need to be computed. This is shown in Fig. 2, which schematically shows the typical processing steps for a normal maximum likelihood detection.

If we assume the matrix and vector have only real values, the number of multiplications needed to generate is given by,

$$\text{Multiplications} = n_R \times n_T \times (\text{Modulation Constellation Size})^{n_T} \qquad (6)$$

or if the matrix and vector have complex values, the number of multiplications needed to generate is given by,

$$\text{Multiplications} = 4 \times n_R \times n_T \times (\text{Modulation Constellation Size})^{n_T} \qquad (7)$$

As can be seen from the above, the complexity of the prior art maximum likelihood detection schemes used in equalising structures for receiving devices in wireless communication systems is very high. Therefore, the prior art proposes several ways of reducing the complexity for maximum likelihood detection processing for multiple-input, multiple-output type systems:

[1] Xiaodong, Li, H. C. Huang, A. Lozano, G. J. Foschini, "Reduced Complexity Detection Algorithms for Systems Using Multi-Element Arrays", Global Telecommunications Conference (Globecom 2000), San Francisco, USA, 27-Nov-1Dec, pp.1072-1076. This paper proposes 2 types of algorithms.

The first algorithm uses Adaptive Group Detection (AGD), which places the possible transmitted signals from the different transmitter antennas into groups. The interference between the groups is then suppressed using interference cancellation or projection techniques. MLD detection is then performed within each group. Since MLD is only performed on a subset of the total transmitter antennas, the complexity is reduced.

The second algorithm called Multi-step Reduced Constellation Detection performs the processing in a number of steps.

The first step uses zero forcing techniques (alternatively MMSE or matched filtering can be used) and provides the second step with a coarse estimate of the sent constellation points from the different transmitter antennas. The second step then uses MLD on neighbors of the coarse estimate obtained from the zero forcing stage. Since MLD is only performed in the second stage using the nearest neighbors of the coarse estimation as candidates complexity is reduced.

[2] G. Awater, A. van Zelst, Richard van Nee, "Reduced Complexity Space Division Multiplexing Receivers", IEEE Vehicular Technology Conference (Spring VTC' 2000), Tokyo, Japan, 15-18 May 2000 Vol. 1. pp. 11-15. This paper describes three different algorithms for reducing the complexity of Maximum Likelihood Detection (MLD). The first algorithm uses a 2-D tree approach to represent the mathematical metrics (from the MLD equation) for the different possible sent sequences. Subsequent lower branches of the tree include the signals from an increasing number of transmit antennas. Maximum Likelihood Sequence Estimation (MLSE) techniques such as Fano's, stack or retain "k-best" path are then used to decide on the best sent sequence. The second algorithm considers the different metrics in N-dimensional space and uses a survivor algorithm to select the best sent sequence. The third algorithm uses QR decomposition to reduce the N-dimension space and then uses a survivor algorithm.

[3] J Li, K. B. Letaief, et al, "Multi-stage Low Complexity Maximum Likelihood Detection for OFDM/SDMA Wireless LANs", IEEE International Conference on Communications (ICC#2001), Helsinki, Finland, 11-14 Feb 2001, Vol. 4, pp.1152-1156. The algorithm described in this paper is a 2-stage algorithm. The first stage of the algorithm uses a conventional detection method like Minimum Mean Square Error (MMSE) or Interference cancellation (IC). From this stage, "sensitive bits" (where "sensitive bits" as bits which are likely to be in error) are identified and passed to the second stage. The second stage of the algorithm uses Maximum Likelihood Detection (MLD). Since MLD for this algorithm only operates on the sensitive bits (which are sub-set of the total bits) complexity is reduced.

[4] Jacky Ho-Yin Fan et al, "A Sub optimum MLD Detection scheme for Wireless MIMO Systems", IEEE International Symposium on Advances in Wireless Communications (ISWC) 2002, Victoria, Canada. The algorithm discussed in this paper is similar to the algorithm discussed in (3). The algorithm consists of 2 stages.

The first stage performs a conventional detection scheme like, Zero Forcing (ZF) or V-BLAST. If the error probability of the symbols (or vectors of symbols) from the first stage, are above a certain threshold, they are then passed to the section stage in which MLD is performed. Since only a subset of the symbols, are passed to the second stage, the complexity is reduced.

The object of the present invention is to provide an equalising structure and method for a receiving device of a wireless communication system, in which transmit information is modulated onto carrier signals according to a modulation scheme, whereby all possible data symbols are represented as constellation points in the signal constellation of the modulation scheme and whereby the equalising structure performs a maximum likelihood detection in order to determine a constellation point with a minimum Euclidean distance to a received signal detector as a most likely received signal vector, which further reduce the complexity of the maximum likelihood detection, particularly for communication systems, which use high level modulation schemes, and which allow a simple implementation of the maximum likelihood detection.

The above object is achieved by an equalising structure according to claim 1 and an equalising method according to claim 6.

The equalising structure according to the present invention comprises dividing means for dividing the constellation points into two or more groups of constellation points. Allocating means for allocating a representative signal vector to each of the formed groups, first detecting means for performing a maximum likelihood detection in order to determine one or more of the representative signal vectors having a minimum Euclidean distance to the received signal vector, and second detecting means for performing a maximum likelihood detection in order to determine which one of the constellation points in the group(s) of the one or more determined representative signal vectors has the minimum Euclidean distance to the received signal vector.

The equalising method according to the present invention comprises the steps of dividing the constellation points into two or more groups of constellation points, allocating a representative signal vector to each of the formed groups, performing a first maximum likelihood detection in order to determine one or more of the representative signal vectors having the minimum Euclidean distance to the received signal vector, and performing a further maximum likelihood detection in order to determine which one of the constellation points in the group(s) of the one or more determined representative signals vectors has the minimum Euclidean distance to the received signal vector.

The present invention further relates to a computer program product directly loadable into the internal memory of a receiving device for receiving information in a wireless communication system, comprising software code portions for performing the method steps of the method according to the present invention when the product is run in the receiving device.

The equalising structure and method of the present invention have the advantage of reducing the complexity of the maximum likelihood detection, especially for high-level modulation schemes. Hereby, reducing the complexity means e.g. reducing the number of multiplications, additions, subtractions and comparisons. Specifically, in the maximum likelihood detection according to the present invention, the required peak processing, especially in terms of multiplications, is reduced. In contrary to the above-mentioned prior art approaches, the equalising structure and method according to the present invention performs a maximum likelihood detection in all processing stages and in all processing steps and does not group the signals into groups of transmitter antenna signals. Further, the present invention does not use a maximum likelihood sequence estimation approach and does not use the survivor algorithm, but only the maximum likelihood detection. Further, the present invention does not use the concept of sensitive bits to decide which bit to pass to the next section, but uses the concept of zooming into the most likely transmitted constellation point at every step. Further, the present invention does not suggest to measure the error probability before proceeding to the next processing stage.

Advantageously, in the equalising structure of the present invention, the dividing means after the determination of the one or more representative signal vector(s) having the minimum Euclidean distance to the signal vector by the detecting means, divides the constellation points into the group(s) of the one or more determined representative signal vector(s) in further groups, whereafter the allocating means allocates a representative signal vector to each of the first groups and the first detecting means performs a most likelihood detection in order to determine one or more of the representative signal vectors having the minimum Euclidean distance to the received signal vector.

Hereby, the dividing means advantageously divides the constellation points in two or more groups, so that one or more of the constellation points are allocated to more than one group. In other words, the dividing means divides the constellation points so that two or more groups are overlapping each other.

Further advantageously, the allocating means determines the representative signal vectors for each of the formed groups by determining a centre point among the constellation points of each group as the respectively representative signal vector. Alternatively, a different point being representative for each group could be chosen.

The present invention further relates to a receiving device for receiving signals in a wireless communication system, comprising two or more antennas for receiving signals, with an equalising structure according to the present invention for processing the signals received by the antennas. In other words, the equalising structure according to the present invention is advantageously implemented into a receiving device of a MIMO system.

In the following description, the present invention is further explained in relation to the enclosed drawings, in which

Fig. 1 shows a schematic block diagram of a prior art MIMO communication system,

Fig. 2 schematically shows the typical processing steps for a prior art maximum likelihood detection,

Fig. 3 schematically shows a block diagram of an equalising structure according to the present invention,

Fig. 4 shows an example of a 16QAM constellation scheme,

Fig. 5 schematically shows an example for a constellation division for a 16QAM constellation scheme,

Fig. 6 schematically shows an example for a constellation split for 16QAM modulation scheme with 9 overlapping regions,

Fig. 7 schematically shows a constellation scheme with one selected constellation point group to be further processed,

Fig. 8 schematically shows a possible implementation of the processing steps for an equalising method according to the present invention,

Fig. 9 schematically shows an example for a 64QAM constellation scheme,

Fig. 10 schematically shows an example of a constellation split of a 64QAM constellation scheme,

Fig. 11 schematically shows an example of a constellation split of a 64QAM constellation scheme with 48 overlapping regions,

Fig. 12 schematically shows a 64QAM constellation scheme with one selected constellation group to be further processed,

Fig. 13 schematically shows an example of a constellation split of a 64QAM constellation schemes into four constellation point groups,

Fig. 14 schematically shows an example of a constellation split of a 64QAM constellation schemes with 9 overlapping constellation point groups,

Fig. 15 schematically shows a 64QAM constellation scheme with a selected constellation point group for further processing, and

Fig. 16 schematically shows a 64QAM constellation scheme with a selected constellation point group after two detection steps selected for further processing.

An equalising structure 10 according to the present invention is schematically shown in Fig. 3. The equalising structure 10 can hereby be comprised in a receiver 1 as shown in Fig. 1. In this case, the equalising structure 10 is adapted to perform a maximum likelihood detection on two parallel incoming signal streams from the fast fourier transformers 8 and 9, respectively. However, it is to be noted that the equalising structure 10 and the corresponding equalising method of the present invention are not restricted to the processing of two parallel received signal streams, but can be used for the processing of one, two, three, four or any other number of parallel received data streams. Although the equalising structure 10 and method according to the present invention are particularly advantageous for use in MIMO communication systems with a plurality of transmitting and receiving antennas, it is to be noted that the present invention can also advantageously be applied to receiving structures with only a single receiving antenna. Further, the present invention can be applied to receiving devices in any kind of wireless communication system, e.g. the GSM, the UTMS or any other suitable wireless communication system, any kind of paging system, any kind of short range communication system, such as wireless LAN systems and so forth. Further, the receiving device according to the present invention can be any kind of electronic equipment adapted to receive wireless signals in a wireless communication system, such as a pager, a personal digital assistant, an electronic equipment for wireless telecommunication, such as a portable phone and so forth.
As shown in Fig. 3, the equalising structure 10 according to the present invention comprises a dividing means 30 for dividing the constellation points of the respectively used modulation scheme into two or more groups of constellation points, an allocating means 31 for allocating a representative signal vector to each of the formed groups, and a first detecting means 32 for performing a maximum likelihood detection in order to determine one or more of the representative signal vectors having the minimum Euclidean distance to the received signal vector. Further, the equalising structure 10 comprises a second detecting means 33 for performing a maximum likelihood detection in order to determine which one of the constellation points in the group(s) of the one or more determined representative signal vectors has the minimum Euclidean distance to the received signal vector. It is to be noted that the dividing means 30, the allocating means 31, the first detecting means 32 and the second detecting means 33 can be implemented in any kind of suitable hardware and/or software structure. For example, the dividing means 30, the allocating means 31, the first detecting means 32 and the second detecting means 33 could be implemented as a computer programme product directly loadable into an internal memory of a receiving device 1, whereby the computer programme product comprises software portions for performing the method steps as described further below.

Further, it is to be noted that the first detecting means 32 and the second detecting means 33 could be realised in a single unit.

In the further more detailed description, the method steps performed in the dividing means 30, the allocating means 31, the first detecting means 32 and the second detecting means 33 are explained in more detail.

In the following this new method is referred to as Sub-Constellation Space Maximum Likelihood Detection (SCS-MLD).

In the dividing means 30 the constellation space is split into a number of zones and the maximum likelihood processing is split into a number of steps, *ST, where ST > = 2*. In each successive step the equalising structure 10 or detector "zooms in" on the most likely sent symbols from each antenna and hence the most likely sent symbol vector. Once the most likely sent symbol vector has been found, the selected sent vector can be optionally further processed using state of the art techniques to produce a soft output (containing reliability information).

To illustrate the operation of this new detection scheme we will use 16-level QAM and $n_R=n_T=2$. For the normal full MLD such a configuration would require 255 comparisons. This is shown in Table 1.

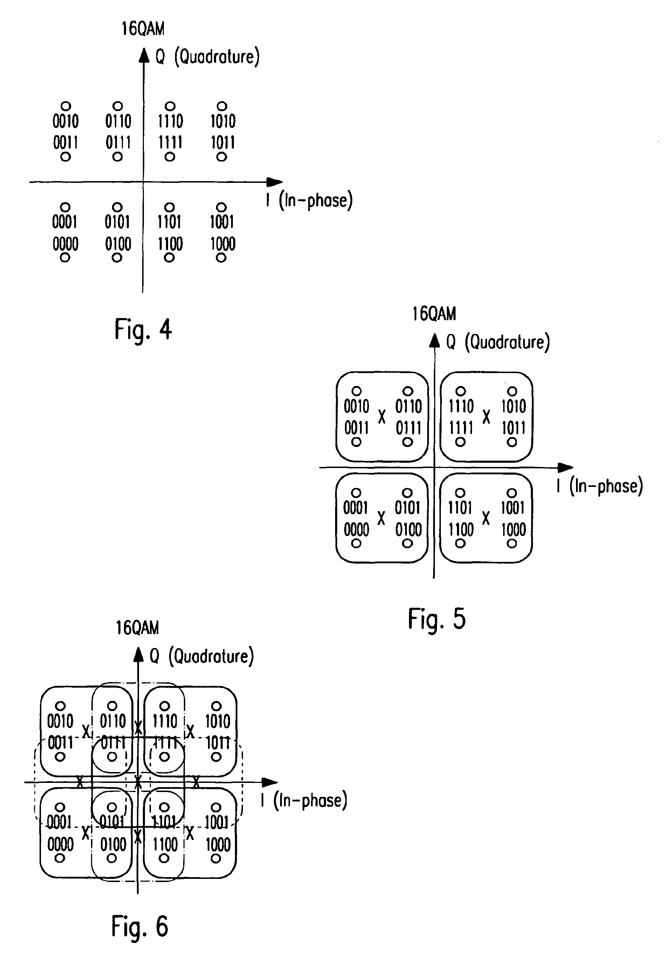

Fig. 4 shows a typical 16 QAM constellation, where there are 4 constellation points in each quadrant. For the first step of SCS-MLD the constellation point are grouped into rectangular zones by the dividing means 30.

There are many different ways to do this. Fig. 5 shows a constellation split in which there are 4 nonoverlapping zones and each zone contains 4 constellation points. Alternatively one or more of the zones can overlap each other which results in an increased number of zones. The extreme case of all of zones overlapping, results in 9 zones, and this is shown in Fig 6.

To illustrate the method we shall assume that the constellation is split into four zones as shown in Fig. 5 and that the processing is achieved in 2 steps (*ST=2*). The general principle can however be applied to any high level modulation scheme, any constellation split and may be processed in more than 2 steps. Hereby, additional detecting means could be implemented in addition to the first and second detecting means or the further detecting steps could be performed by the first and/or the second detecting means.

Step 1:

The goal of the first step is to determine from which zone the most likely sent constellation point came from. To achieve this, it is assumed that the transmitted signals from the different antennas are the centres of the different zones (These are marked as crosses in Fig 5.) and that the transmit signal vector is denoted as $s_{zone}$ where $s_{zone} \in C$ by the allocating means 31.

The first detecting means 32 searches over the set of all possible transmitted zones to decide in, favour of the transmit signal vector which belongs to the zone which has the minimum Euclidean distance to the receive vector ,

$$\hat{s}_{zone} = \arg \min_{s_{zone} \in C} \|x - H s_{zone}\|^2 \tag{8}$$

In this step the set size of C is given by

$$C = (\text{number of zones})^{n_T} . \tag{9}$$

For this example with (4 zones and $n_R=n_T=2$) there are therefore 16 possible $s_{zone}$ vectors which equates to 15 comparisons..

Step 2:

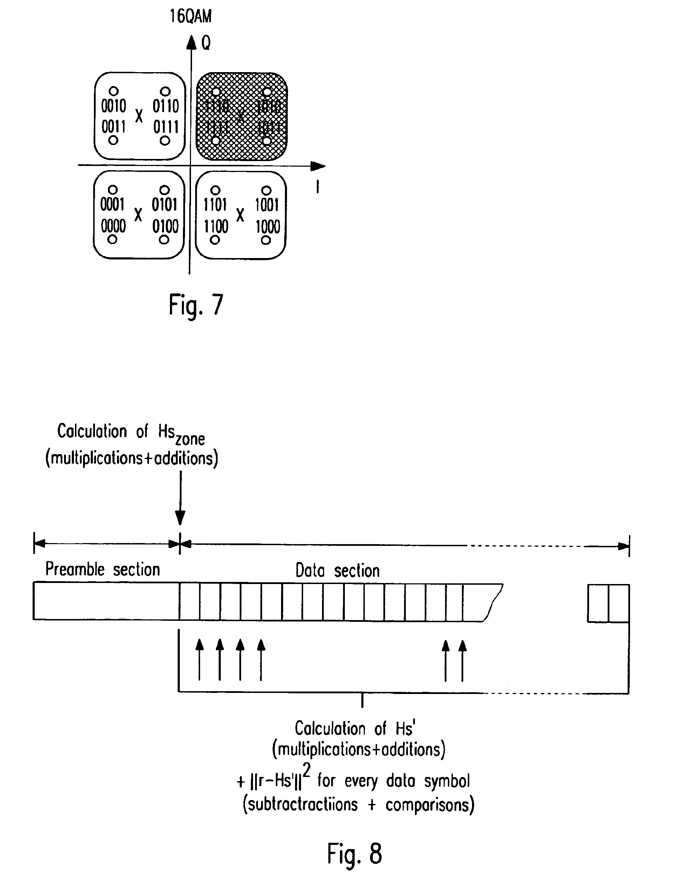

Once the most likely sent combination of constellation zones from the different antennas has been identified in the first detecting means 32, the second step (In this example last step) concentrates on the points in these zones. This is shown in Fig 7. For this final step the transmit signal vector is denoted as s' (its elements are the constellation points in the identified zones) where s' $\in A_{\text{zone}}$ and where, $A_{\text{zone}} \subset A$.

The second detecting means 33 then search over all the possible sent vectors s' to decide in favour of the sent vector which has the minimum Euclidean distance to the receive vector.

$$\hat{\mathbf{s}} = \arg \min_{s' \in A_{\text{zone}}} \|\mathbf{x} - \mathbf{H}\mathbf{s}'\|^2 \qquad (10)$$

For this step, the size of the $A_{\text{zone}}$ is given by,

$$A_{\text{zone}} = (\text{constellation points per zone})^{n_T} . \qquad (11)$$

For this example (4 constellation points in each zone and $n_R = n_T = 2$) there are 16 possible which equates to 15 comparisons.

As illustrated with this example the total number of comparisons 30 (15 in step 1 + 15 in step 2) is considerably less than the 255 needed for full MLD.

Depending upon how the zones are split, it is possible that errors can be made in the first stage, because the received vectors **x** contains value which are between the assigned zone division boundaries. It is therefore advantages that a number ($ZC$) of the best $s_{\text{zone}}$ are past through to the next stage. For the 2 step example shown above the total number of comparisons therefore becomes:

$$\text{Total number of comparisons} = \text{comparisons in first stage} + ZC \times \text{comparisons in second stage.} \qquad (12)$$

For the general case of the SCS-MLD algorithm with $ST$ steps.

$$\text{Total number of comparisons} = \text{comparsions for step 1} + \sum_{i=2}^{ST} ZC_i \times \text{comparisons for step } i \qquad (13)$$

The required $ZC$ for each stage depends upon the required performance.

Furthermore, by increasing the overlapping between the assigned zones (such as shown in Fig. 6), the possibility of making a zone decision error can be reduced and $ZC$ also reduced. However, by increasing the number of zones the comparisons for the respective step is also increased. The optimal number of zones for each step and the number of zones ($ZC$), which are passed through to the next step, need to be carefully considered to reduce the complexity for a given performance.

An example for the typical processing steps for SCS-MLD for communication system using a preamble followed by data symbols is shown Fig 8. By comparing Fig. 8 with Fig. 2, it can be seen that instead of the extremely large number of multiplications needed in the preamble phase for full MLD to calculate Hs (see equations (6) and (7)), the SCS-MLD algorithm can be implemented with a reduced number of multiplications and these multiplications are spread out over the duration of the communication link. The peak processing for the multiplications required can be significantly reduced.

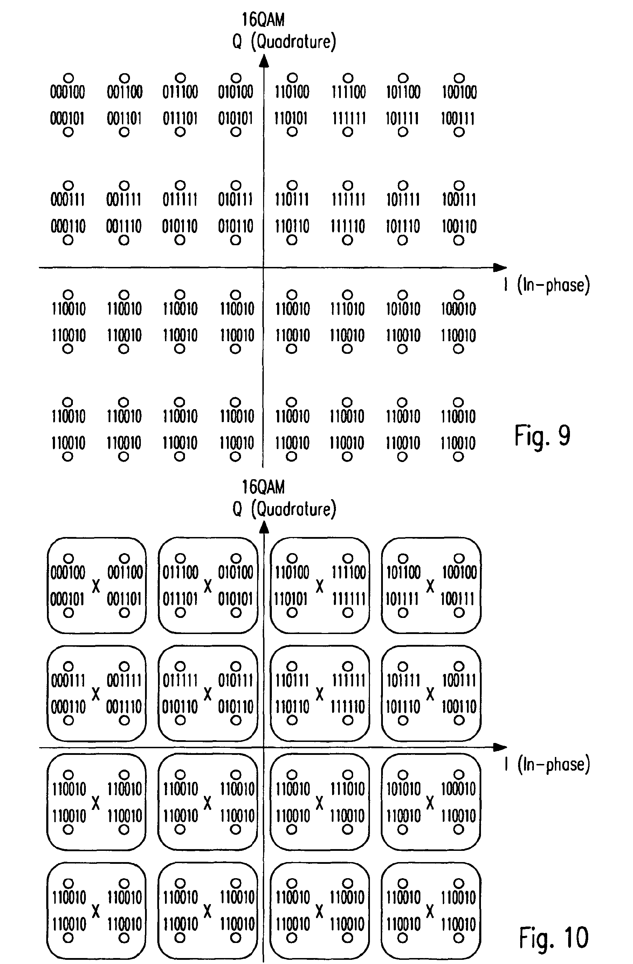

An example of the SCS-MLD algorithm for the 64 QAM scheme is shown in Fig 9. Some different ways to split up the constellations for the first stage are shown in Fig. 10, Fig. 11, Fig. 13 and Fig 14.

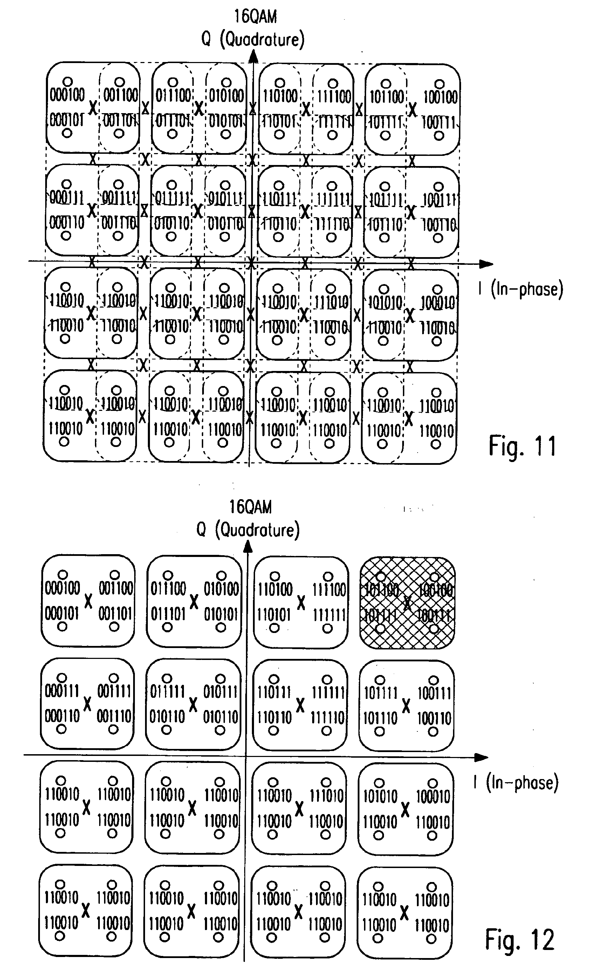

When using SCS-MLD the 64 QAM constellation could be processed in 2 steps *(ST* = 2), by splitting the constellation as shown in Fig. 10 (or Fig. 11) for the first step. This first step identifies which zone consisting of 4 points contains the most likely sent constellation point. The second step then process the 4 constellation point in the chosen constellation zones for each transmitter antenna to decide in favour of the most likely sent point. This second step is shown in Fig 12.

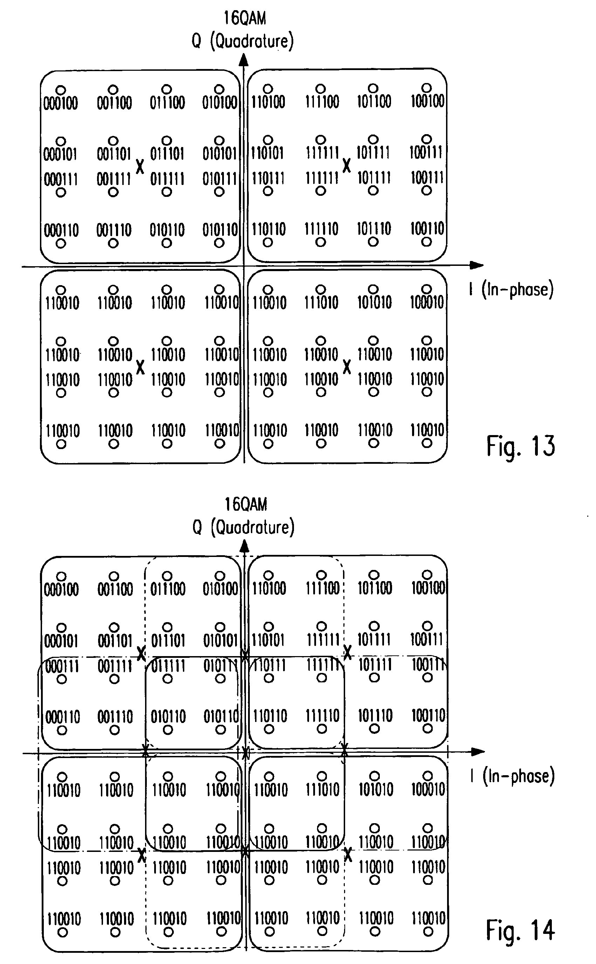

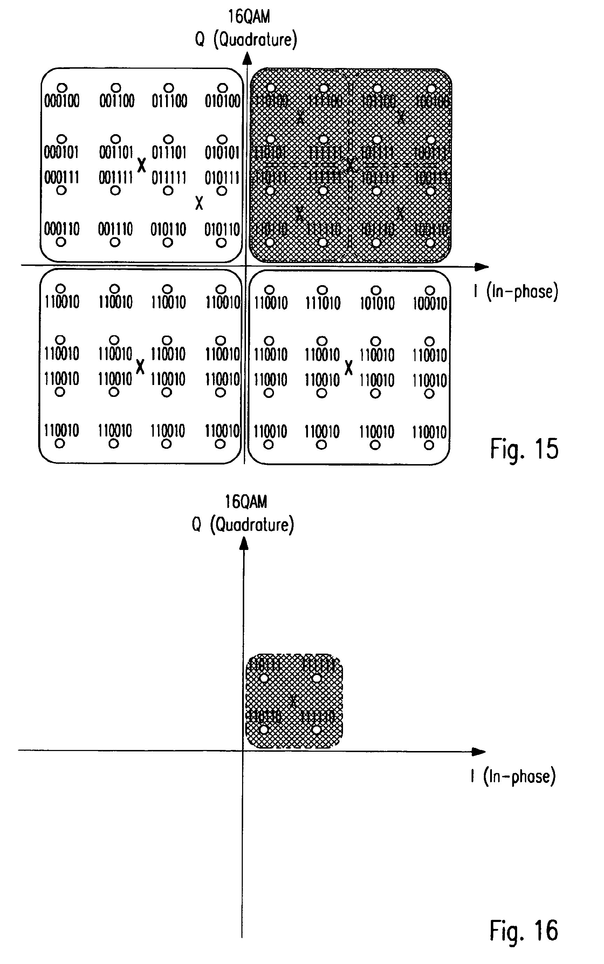

Alternatively the SCS-MLD could be processed in 3 steps ($ST = 3$), by splitting the constellation as shown in Fig. 13 (or Fig. 14) for the first step. The results of the first step from the first detecting means 32, identifies which zone consisting of 16 constellation points contains the most likely sent constellation point for each transmitter antenna. The second step (see Fig. 15) performed also by the first detecting means 32 or an additional detecting means then identifies which sub-zone (consisting of 4 points) contained within the chosen zone from step1, contains the most likely sent constellation point. These zones are shown as dotted lines in Fig 15. The third step performed by the second detecting means 33, then processes the 4 constellation point in the chosen zone of step 2 to decide in favour of the most likely sent constellation point for each antenna. This is shown in Fig. 16.

The present invention does provide a significantly improved maximum likelihood detection in which the detection is separated in two or more steps, whereby each step uses a maximum likelihood detection and whereby the detection gets fmer from step to step.

## Claims

1. Equalizing structure (10) for a receiving device of a wireless communication system, in which transmit information is modulated onto carrier signals according to a modulation scheme, whereby all possible data symbols are represented as constellation points in the signal constellation of the modulation scheme and whereby the equalizing structure performs a maximum likelihood detection in order to determine a constellation point with a minimum Euclidean distance to a received signal vector as a most likely received signal vector, with dividing means (30) for dividing the constellation points into two or more groups of constellation points,
allocating means (31) for allocating a representative signal vector to each of the formed groups, first detecting means (32) for performing a maximum likelihood detection in order to determine one or more of the representative signal vectors having the minimum Euclidean distance to the received signal vector, and
second detecting means (33) for performing a maximum likelihood detection in order to determine which one of the constellation points in the group(s) of the one or more determined representative signal vectors has the minimum Euclidean distance to the received signal vector.

2. Equalizing structure (10) for a receiving device of a wireless communication system according to claim 1,
**characterized by**
the dividing means (30) after the determination of the one or more representative signal vector(s) having the minimum Euclidean distance to the received signal vector by the first detecting means (32), divides the constellation points in the group(s) of the one or more determined representative signal vector(s) in further groups, whereafter the allocating means (31) allocates a representative signal vector to each of the further groups and the first detecting means (32) performs a most likelihood detection in order to determine one or more of the representative signal vectors having the minimum Euclidean distance to the received signal vector.

3. Equalizing structure (10) for a receiving device of a wireless communication system according to claim 1 or 2,
**characterized in,**
**that** the dividing means (30) divides the constellation points in two or more groups so that one or more of the constellation points are allocated to more than one group.

4. Equalizing structure (10) for a receiving device of a wireless communication system according to claim 1, 2 or 3,
**characterized in,**
**that** the allocating means (31) determines the representative signal vectors for each of the formed groups by determining a center point among the constellation points of each group as the respectively representative signal vector.

5. Receiving device (1) for receiving signals in a wireless communication system, comprising two or more antennas (4, 5) for receiving signals, with an equalizing structure (10) according to one of the claims 1 to 4 for processing the signals received by the antennas.

6. Equalizing method for equalizing signals transmit and received in a wireless communication system, in which transmit information is modulated onto carrier signals according to a modulation scheme, whereby all possible data symbols are represented as constellation points in the signal constellation of the modulation scheme, whereby the equalizing method comprises a most likelihood processing in order to determine a constellation point with a minimum Euclidean distance to a received signal vector as a most likely received signal vector,

the equalizing method comprising the steps of

dividing the constellation points into two or more groups of constellation points,

allocating a representative signal vector to each of the formed groups,

performing a first maximum likelihood detection in order to determine one or more of the representative signal vectors having the minimum Euclidean distance to the received signal vector, and

performing a further maximum likelihood detection in order to determine which one of the constellation points in the group(s) of the one or more determined representative signal vectors has the minimum Euclidean distance to the received signal vector.

7. Equalizing method according to claim 6,
   **characterized in,**
   **that** after the determination of the one or more representative signal vector(s) having the minimum Euclidean distance to the received signal vector in the first most likelihood detetction, the constellation points in the group(s) of the one or more determined representative signal vector(s) are divided in further groups, whereafter a representative signal vector is allocated to each of the further groups and a second most likelihood detection is performed in order to determine one or more of the representative signal vectors having the minimum Euclidean distance to the received signal vector.

8. Equalizing method according to claim 6 or 7,
   **characterized in,**
   **that** the constellation points are divided in to or more groups so that one or more of the constellation points are allocated to more than one group.

9. Equalizing method according to claim 6, 7 or 8,
   **characterized in,**
   **that** the representative signal vectors for each of the formed groups are determined by determining a center point among the constellation points of each group as the respectively representative signal vector.

10. Computer program product directly loadable into the internal memory of a receiving device (1) for receiving information in a wireless communication system, comprising software code portions for performing the method steps of one of the claims 6 to 9 when said product is run in said receiving device.

**Patentansprüche**

1. Entzerrerstruktur (10) für eine Empfangsvorrichtung eines drahtlosen Kommunikationssystems, in dem die Sendeinformation nach Maßgabe eines Modulationsschemas auf Trägersignale moduliert wird, wobei alle möglichen Datensymbole als Konstellationspunkte in der Signalkonstellation des Modulationsschemas dargestellt werden und wobei die Entzerrerstruktur eine Maximum-Likelihood-Detektierung ausführt, um einen Konstellationspunkt mit einem kleinsten euklidischen Abstand zu einem empfangenen Signalvektor als einem wahrscheinlichsten empfangenen Signalvektor zu bestimmen,

   mit einer Teilereinrichtung (30) zum Teilen der Konstellationspunkte in zwei oder mehr Gruppen von Konstellationspunkten,

   mit einer Zuteilungseinrichtung (31) zum Zuteilen eines repräsentativen Signalvektors an jede der gebildeten Gruppen,

   mit einer ersten Detektoreinrichtung (32) zur Durchführung einer Maximum-Likelihood-Detektierung, um einen oder mehrere repräsentative Signalvektoren zu ermitteln, die den kleinsten euklidischen Abstand zu dem empfangenen Signalvektor haben,

   mit einer zweiten Detektoreinrichtung (33) zur Durchführung einer Maximum-Likelihood-Detektierung, um festzustellen, welcher der Konstellationspunkte in der (den) Gruppe(n) des einen oder der mehreren ermittelten repräsentativen Signalvektoren den kleinsten euklidischen Abstand zu dem empfangenen Signalvektor hat.

2. Entzerrerstruktur (10) für eine Empfangsvorrichtung eines drahtlosen Kommunikationssystems nach Anspruch 1,
   **dadurch gekennzeichnet,**
   **daß** die Teilereinrichtung (30) nach der mit Hilfe der ersten Detektoreinrichtung (32) durchgeführten Ermittlung des einen oder der mehreren repräsentativen Signalvektoren mit dem kleinsten euklidischen Abstand zu dem empfangenen Signalvektor die Konstellationspunkte in der (den) Gruppe(n) des einen oder der mehreren ermittelten repräsentativen Signalvektoren in weitere Gruppen unterteilt, woraufhin die Zuteilungseinrichtung (31) jeder der weiteren Gruppen einen repräsentativen Signalvektor zuteilt und die erste Detektoreinrichtung (32) eine Maximum-Likelihood-Detektierung durchführt, um einen oder mehrere der repräsentativen Signalvektoren zu ermitteln, die den kleinsten euklidischen Abstand zu dem empfangenen Signalvektorhaben.

3. Entzerrerstruktur (10) für eine Empfangsvorrichtung eines drahtlosen Kommunikationssystems nach Anspruch 1 oder 2,
   **dadurch gekennzeichnet,**
   **daß** die Teilereinrichtung (30) die Konstellationspunkte in der Weise in zwei oder mehr Gruppen unterteilt, daß einer oder mehrere der Konstellationspunkte mehr als einer Gruppe zugeteilt werden.

4. Entzerrerstruktur (10) für eine Empfangsvorrichtung eines drahtlosen Kommunikationssystems nach Anspruch 1, 2 oder 3,
   **dadurch gekennzeichnet,**
   **daß** die Zuteilungseinrichtung (31) die repräsentativen Signalvektoren für jede der gebildeten Gruppen ermittelt, indem sie unter den Konstellationspunkten jeder Gruppe einen zentralen Punkt als den jeweils repräsentativen Signalvektor ermittelt.

5. Empfangsvorrichtung (1) zum Empfangen von Signalen in einem drahtlosen Kommunikations system, das eine oder mehrere Antennen (4, 5) zum Empfangen von Signalen aufweist, mit einer Entzerrerstruktur (10) nach einem der Ansprüche 1 bis 4 für die Verarbeitung der von den Antennen empfangenen Signale.

6. Entzerrungsverfahren zum Entzerren von Signalen, die in einem drahtlosen Kommunikations system gesendet und empfangen werden, in dem die Sendeinformation nach Maßgabe eines Modulationsschemas auf Trägersignale moduliert wird, wobei alle möglichen Datensymbole als Konstellationspunkte in der Signalkonstellation des Modulationsschemas dargestellt werden und wobei das Entzerrungsverfahren eine Maximum-Likelihood-Verarbeitung durchführt, um einen Konstellationspunkt mit einem kleinsten euklidischen Abstand zu einem empfangenen Signalvektor als einem wahrscheinlichsten empfangenen Signalvektor zu bestimmen, wobei das Entzerrungsverfahren die Verfahrensschritte aufweist:

   Teilen der Konstellationspunkte in zwei oder mehr Gruppen von Konstellationspunkten,
   Zuteilen eines repräsentativen Signalvektors an jede der gebildeten Gruppen,
   Durchführung einer ersten Maximum-Likelihood-Detektierung, um einen oder mehrere repräsentative Signalvektoren zu ermitteln, die den kleinsten euklidischen Abstand zu dem empfangenen Signalvektor haben,
   Durchführung einer weiteren Maximum-Likelihood-Detektierung, um festzustellen, welcher der Konstellationspunkte in der (den) Gruppe(n) des einen oder der mehreren ermittelten repräsentativen Signalvektoren den kleinsten euklidischen Abstand zu dem empfangenen Signalvektor hat.

7. Entzerrungsverfahren nach Anspruch 6,
   **dadurch gekennzeichnet,**
   **daß** nach der Ermittlung des einen oder der mehreren repräsentativen Signalvektoren mit dem kleinsten euklidischen Abstand zu dem empfangenen Signalvektor in der ersten Maximum-Likelihood-Detektierung die Konstellationspunkte in der (den) Gruppe(n) des einen oder der mehreren ermittelten repräsentativen Signalvektoren in weitere Gruppen unterteilt werden, woraufhin jeder der weiteren Gruppen ein repräsentativer Signalvektor zugeteilt wird und eine zweite Maximum-Likelihood-Detektierung durchgeführt wird, um einen oder mehrere der repräsentativen Signalvektoren zu ermitteln, die den kleinsten euklidischen Abstand zu dem empfangenen Signalvektor haben.

8. Entzerrungsverfahren nach Anspruch 6 oder 7,
   **dadurch gekennzeichnet,**
   **daß** die Konstellationspunkte in der Weise in zwei oder mehr Gruppen unterteilt werden, daß einer oder mehrere der Konstellationspunkte mehr als einer Gruppe zugeteilt werden.

9. Entzerrungsverfahren nach Anspruch 6m 7 oder 8,
   **dadurch gekennzeichnet,**
   **daß** die repräsentativen Signalvektoren für jede der gebildeten Gruppen ermittelt werden, indem unter den Konstellationspunkten jeder Gruppe ein zentraler Punkt als der jeweils repräsentative Signalvektor ermittelt wird.

**10.** Computerprogrammprodukt, das direkt in den internen Speicher einer Empfangsvorrichtung (1) zum Empfangen von Informationen in einem drahtlosen Kommunikationssystem ladbar ist, mit Software-Codeabschnitten zur Durchführung der Verfahrensschritte nach einem der Ansprüche 6 bis 9, wenn das Produkt in der Empfangsvorrichtung abläuft.

**Revendications**

**1.** Circuit d'égalisation (10) pour un dispositif de réception d'un système de communication sans fil, dans lequel des informations de transmission sont modulées sur des signaux porteurs en accord avec un schéma de modulation, moyennant quoi tous les symboles de données possibles sont représentés sous la forme de points de constellation dans la constellation de signaux du schéma de modulation, et moyennant quoi le circuit d'égalisation exécute une détection à vraisemblance maximale dans le but de déterminer un point de constellation avec une distance euclidienne minimale par rapport à un vecteur de signal reçu en tant qu'un vecteur de signal reçu le plus probable, avec des moyens de division (30) pour diviser les points de constellation en deux groupes de points de constellation, ou plus ;
des moyens d'affectation (31) pour affecter un vecteur de signal représentatif à chacun des groupes formés, des premiers moyens de détection (32) pour exécuter une détection à vraisemblance maximale dans le but de déterminer un ou plusieurs des vecteurs de signal représentatifs ayant la distance euclidienne minimale par rapport au vecteur de signal reçu ; et
des deuxièmes moyens de détection (33) pour exécuter une détection à vraisemblance maximale dans le but de déterminer lequel parmi des points de constellation dans le(s) groupe(s) du un - ou des plusieurs - vecteur(s) de signal représentatif(s) déterminé(s) a la distance euclidienne minimale par rapport au vecteur de signal reçu.

**2.** Circuit d'égalisation (10) pour un dispositif de réception d'un système de communication sans fil selon la revendication 1,
**caractérisé en ce que** :

les moyens de division (30), après la détermination du un - ou des plusieurs - vecteur(s) de signal représentatif (s) ayant la distance euclidienne minimale par rapport au vecteur de signal reçu par les premiers moyens de détection (32), divisent les points de constellation dans le(s) groupe(s) du un - ou des plusieurs - vecteur(s) de signal représentatif(s) déterminé(s) en d'autres groupes, à la suite de quoi les moyens d'affectation (31) affectent un vecteur de signal représentatif à chacun des autres groupes formés, et les premiers moyens de détection (32) exécutent une détection à vraisemblance maximale dans le but de déterminer un ou plusieurs des vecteurs de signal représentatifs ayant la distance euclidienne minimale par rapport au vecteur de signal reçu.

**3.** Circuit d'égalisation (10) pour un dispositif de réception d'un système de communication sans fil selon la revendication 1 ou 2,
**caractérisé en ce,**
**que** les moyens de division (30) divisent les points de constellation en deux groupes - ou plus - de telle sorte que un ou plusieurs des points de constellation sont affectés à plus d'un groupe.

**4.** Circuit d'égalisation (10) pour un dispositif de réception d'un système de communication sans fil selon la revendication 1, 2 ou 3,
**caractérisé en ce,**
**que** les moyens d'affectation (31) déterminent les vecteurs de signal représentatifs pour chacun des groupes formés en définissant un point central parmi les points de constellation de chaque groupe comme étant le vecteur de signal représentatif, respectivement.

**5.** Dispositif de réception (1) servant à recevoir des signaux dans un système de communication sans fil, comprenant deux antennes (4, 5) - ou plus - pour recevoir des signaux, avec un circuit d'égalisation (10) selon l'une des revendications 1 à 4 pour traiter les signaux reçus par les antennes.

**6.** Procédé d'égalisation pour égaliser des signaux transmis et reçus dans un système de communication sans fil, dans lequel des informations de transmission sont modulées sur des signaux porteurs en accord avec un schéma de modulation, moyennant quoi tous les symboles de données possibles sont représentés sous la forme de points de constellation dans la constellation de signaux du schéma de modulation, moyennant quoi le procédé d'égalisation comprend une opération de détection à vraisemblance maximale dans le but de déterminer un point de constellation avec une distance euclidienne minimale par rapport à un vecteur de signal reçu en tant qu'un vecteur de signal reçu le plus probable, le procédé d'égalisation comprenant les étapes consistant à :

diviser les points de constellation en deux groupes de points de constellation - ou plus ;
affecter un vecteur de signal représentatif à chacun des groupes formés ;
exécuter une première détection à vraisemblance maximale dans le but de déterminer un ou plusieurs des vecteurs de signal représentatifs ayant la distance euclidienne minimale par rapport au vecteur de signal reçu ; et exécuter une autre détection à vraisemblance maximale dans le but de déterminer lequel parmi des points de constellation dans le(s) groupe(s) du un - ou des plusieurs - vecteur(s) de signal représentatif(s) déterminé(s) a la distance euclidienne minimale par rapport au vecteur de signal reçu.

7.  Procédé d'égalisation selon la revendication 6,
    **caractérisé en ce,**
    **que**, après la détermination du un - ou des plusieurs - vecteur(s) de signal représentatif(s) ayant la distance euclidienne minimale par rapport au vecteur de signal reçu par les premiers moyens de détection , les points de constellation dans le (s) groupe (s) du un - ou des plusieurs - vecteur(s) de signal représentatif(s) déterminé(s) sont divisés en d'autres groupes, à la suite de quoi un vecteur de signal représentatif est affecté à chacun des autres groupes formés et une deuxième détection à vraisemblance maximale est exécutée dans le but de déterminer un ou plusieurs des vecteurs de signal représentatifs ayant la distance euclidienne minimale par rapport au vecteur de signal reçu.

8.  Procédé d'égalisation selon la revendication 6 ou 7,
    **caractérisé en ce,**
    **que** les points de constellation sont divisés en deux groupes - ou plus - de telle sorte que un ou plusieurs des points de constellation sont affectés à plus d'un groupe.

9.  Procédé d'égalisation selon la revendication 6, 7 ou 8,
    **caractérisé en ce,**
    **que** les vecteurs de signal représentatifs pour chacun des groupes formés sont déterminés en définissant un point central parmi les points de constellation de chaque groupe comme étant le vecteur de signal représentatif, respectivement.

10. Produit de programme d'ordinateur pouvant être chargé directement dans la mémoire interne d'un dispositif de réception (1) servant à recevoir des informations dans un système de communication sans fil, comprenant des parties de code de programme informatique pour exécuter les étapes du procédé selon l'une des revendications 6 à 9 quand ledit produit est exécuté dans ledit dispositif de réception.

Fig. 1

EP 1 592 191 B1

Calculation of Hs
(multiplications+additions)

Preamble section    Data section

Calculation of $\|r-Hs\|^2$ for every
data symbol
(subtractractiions + comparisons)

Fig. 2

8

9

10

30  31  32  33

12

13

Fig. 3

**16QAM**

Fig. 4

Fig. 5

Fig. 6

16QAM

Fig. 7

Calculation of Hs$_{zone}$
(multiplications+additions)

Preamble section                    Data section

Calculation of Hs'
(multiplications+additions)

$+ \|r - Hs'\|^2$ for every data symbol
(subtractractiions + comparisons)

Fig. 8

16QAM
Q (Quadrature)

| 000100 | 001100 | 011100 | 010100 | 110100 | 111100 | 101100 | 100100 |
| 000101 | 001101 | 011101 | 010101 | 110101 | 111111 | 101111 | 100111 |

| 000111 | 001111 | 011111 | 010111 | 110111 | 111111 | 101111 | 100111 |
| 000110 | 001110 | 010110 | 010110 | 110110 | 111110 | 101110 | 100110 |

I (In-phase)

| 110010 | 110010 | 110010 | 110010 | 110010 | 111010 | 101010 | 100010 |
| 110010 | 110010 | 110010 | 110010 | 110010 | 110010 | 110010 | 110010 |

| 110010 | 110010 | 110010 | 110010 | 110010 | 110010 | 110010 | 110010 |
| 110010 | 110010 | 110010 | 110010 | 110010 | 110010 | 110010 | 110010 |

Fig. 9

16QAM
Q (Quadrature)

I (In-phase)

Fig. 10

Fig. 11

Fig. 12

16QAM
Q (Quadrature)

Fig. 13

16QAM
Q (Quadrature)

Fig. 14

Fig. 15

Fig. 16